(19) **Europäisches Patentamt / European Patent Office / Office européen des brevets**

(11) **EP 1 513 366 B1**

(12) **EUROPEAN PATENT SPECIFICATION**

(45) Date of publication and mention
of the grant of the patent:
**05.11.2008 Bulletin 2008/45**

(51) Int Cl.:
***H04Q 7/38*** (2006.01)

(21) Application number: **04027093.6**

(22) Date of filing: **03.09.1999**

(54) **Method and system for locating a mobile subscriber in a CDMA communication system**

Verfahren und System zur Bestimmung des Aufenthaltsorts eines Funkteilnehmers in einem CDMA-Kommunikationssystem

Procédé et système de localisation d'un abonne mobile dans un système de télécommunications AMDC

(84) Designated Contracting States:
**AT BE CH CY DE DK ES FI FR GB GR IE IT LI LU MC NL PT SE**

(30) Priority: **22.03.1999 US 274081**

(43) Date of publication of application:
**09.03.2005 Bulletin 2005/10**

(60) Divisional application:
**08014870.3**

(62) Document number(s) of the earlier application(s) in
accordance with Art. 76 EPC:
**99945478.8 / 1 163 819**

(73) Proprietor: **INTERDIGITAL TECHNOLOGY CORPORATION**
**Wilmington, DE 19810 (US)**

(72) Inventor: **Mesecher, David K.**
**Huntington Station**
**NY 11746 (US)**

(74) Representative: **Bohnenberger, Johannes et al**
**Meissner, Bolte & Partner GbR**
**Widenmayerstrasse 48**
**80538 München (DE)**

(56) References cited:
EP-A- 0 865 223    WO-A-97/47148
WO-A-98/18018    US-A- 5 506 864
US-A- 5 600 706    US-A- 5 736 964

## Description

### Field of the Invention

This invention generally relates to spread spectrum code division multiple access (CDMA) communication systems. More particularly, the present invention relates to a system and method that determines the geographic location of a subscriber unit within a CDMA communication system.

### Description of the Prior Art

Wireless systems capable of locating a subscriber are presently known in the art. One wireless technique uses the global positioning system (GPS). In GPS, the communication handset receives data transmitted continuously from the 24 NAVSTAR satellites. Each satellite transmits data indicating the satellite's identity, the location of the satellite and the time the message was sent. The handset compares the time each signal was received with the time it was sent to determine the distance to each satellite. Using the determined distances between the satellites and the handset along with the location of each satellite, the handset can triangulate its location and provide the information to a communication base station. However, the incorporation of a GPS within a subscriber unit increases its cost.

Another subscriber location technique is disclosed in U.S. Patent No. 5,732,354. A mobile telephone using time division multiple access (TDMA) as the air interface is located within a plurality of base stations. The mobile telephone measures the received signal strength from each of the base stations and transmits each strength to each respective base station. At a mobile switching center, the received signal strengths from the base stations are compared and processed. The result yields the distance between the mobile telephone and each base station. From these distances, the location of the mobile telephone is calculated.

Wireless communication systems using spread spectrum modulation techniques are increasing in popularity. In code division multiple access (CDMA) systems, data is transmitted using a wide bandwidth (spread spectrum) by modulating the data with a pseudo random chip code sequence. The advantage gained is that CDMA systems are more resistant to signal distortion and interfering frequencies in the transmission path than communication systems using the more common time division multiple access (TDMA) or frequency division multiple access (FDMA) techniques.

There exists a need for an accurate mobile subscriber unit location system that uses data already available in an existing CDMA communication system.

WO 98/18018 discloses a base station having two antennas spaced apart. Receivers coupled to the antennas provide first and second received signals with a phase difference dependent upon a direction of the mobile terminal relative to the antennas. The determined direction and distance determined from received signal strength are used to locate a mobile terminal.

EP0865223 A2 discloses a mobile station receiving a first signal sequence transmitted by a base station and transmitting a second signal sequence in synchronization with the first signal sequence, so as to enable a base station to estimate a position of the mobile station.

The present invention provides a base station comprising: a plurality of antennas, each of the antennas separated by a known distance; means for transmitting a first spread spectrum signal having a first code; means for comparing a phase difference of a carrier signal of a second spread spectrum signal as received by each of the plurality of antennas; means for determining an angle of the received second spread spectrum signal using the known distance between the antennas and the phase difference; the base station characterized in that it comprises:

means for receiving, using the plurality of antennas, the second spread spectrum signal having a second code, the second spread spectrum signal time synchronized with the first spread spectrum signal;
means for making a distance determination based on in part a timing difference between the second code of the received second spread spectrum signal and the first code of the base station's transmitted first spread spectrum signal;
means for determining a location of a source of the second spread spectrum signal using the determined angle and the distance determination; and
means for analyzing an impulse response of multipath components of the second spread spectrum signal to determine a first received component of the second spread spectrum signal and the determined first received component is used to make the distance determination.

The invention determines the geographic location of a subscriber unit within a CDMA communication system. At least one base station transmits a spread spectrum signal with a chip code sequence unique to that base station. A subscriber unit receives the base station signal and transmits a spread spectrum signal with a unique chip code sequence time synchronized with the chip code sequence of the received base station signal. The base station receives the subscriber unit signal and compares the chip code sequence of the received subscriber unit signal with the chip code sequence signal transmitted by the base station to determine the location of the subscriber unit.

## BRIEF DESCRIPTION OF THE DRAWINGS

**Figure 1** is an illustration of a simplified, prior art CDMA system.

**Figure 2** is an illustration of a prior art CDMA system.

**Figure 3** is a block diagram of major components within a prior art CDMA system.

**Figure 4** is a block diagram of components within a prior art CDMA system.

**Figure 5** is an illustration of a global pilot signal and an assigned pilot signal being communicated between a base station and a subscriber unit.

**Figure 6** is a block diagram of an arrangement using at least three base stations.

**Figure 7** is an illustration of locating a subscriber unit using at least three base stations.

**Figure 8** is a block diagram showing components used in a subscriber unit.

**Figure 9** is an illustration of locating a subscriber unit using two base stations.

**Figure 10** is an illustration of locating a subscriber unit using more than two base stations.

**Figure 11** is a detailed illustration of locating a subscriber unit using a base station with multiple antennas according to the present invention.

**Figure 12** is an illustration of locating a subscriber unit using a base station with multiple antennas according to the present invention.

**Figure 13** is a block diagram of an arrangement using multiple base stations.

**Figure 14** is an illustration of multipath.

**Figure 15** is a graph of a typical impulse response of multipath components.

**Figure 16** is a block diagram of an arrangement correcting for multipath.

The invention will be described with reference to the drawing figures where like numerals represent like elements throughout.

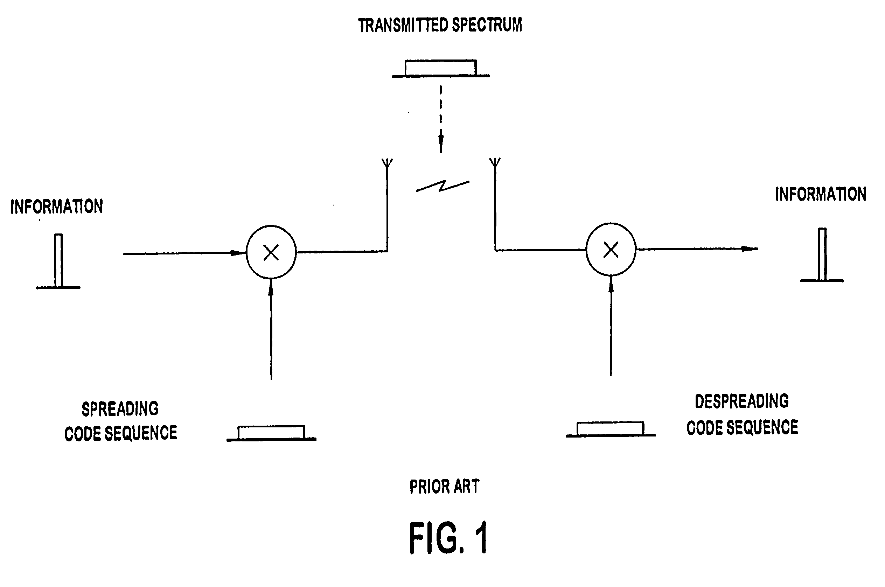

Shown in **Figure 1** is a simplified CDMA communication system. A data signal with a given bandwidth is mixed with a spreading code generated by a pseudo random chip code sequence generator producing a digital spread spectrum signal. Upon reception, the data is reproduced after correlation with the same pseudo random chip code sequence used to transmit the data. Every other signal within the transmission bandwidth appears as noise to the signal being despread.

For timing synchronization with a receiver, an unmodulated pilot signal is required for every transmitter. The pilot signal allows respective receivers to synchronize with a given transmitter, allowing despreading of a traffic signal at the receiver.

In a typical CDMA system, base stations send global pilot signals to all subscriber units within their communicating range to synchronize transmissions in a forward direction. Additionally, in some CDMA systems, for example a B-CDMA™ system, each subscriber unit sends a unique assigned pilot signal to synchronize transmissions in a reverse direction.

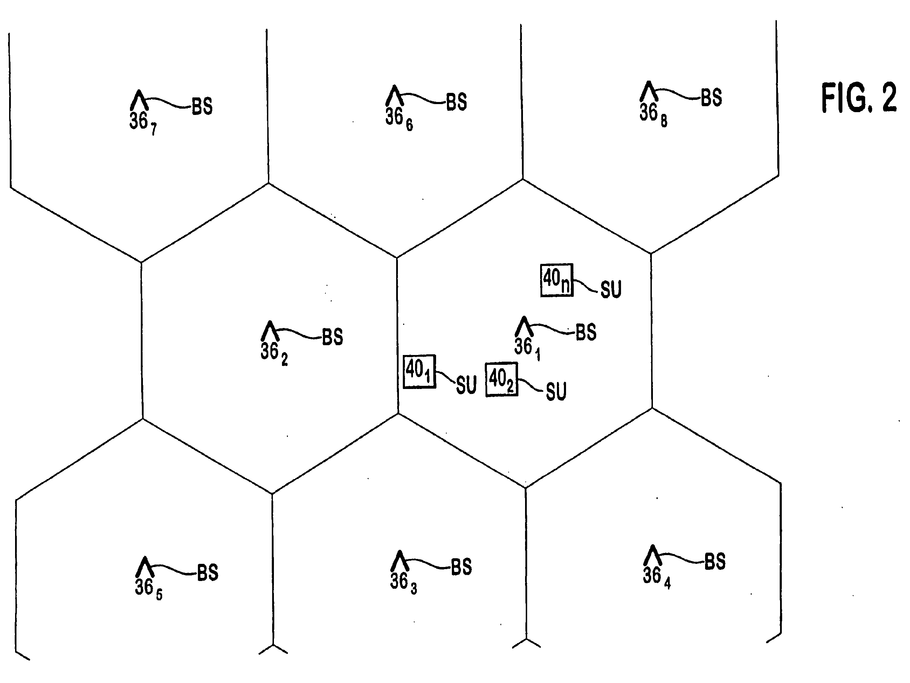

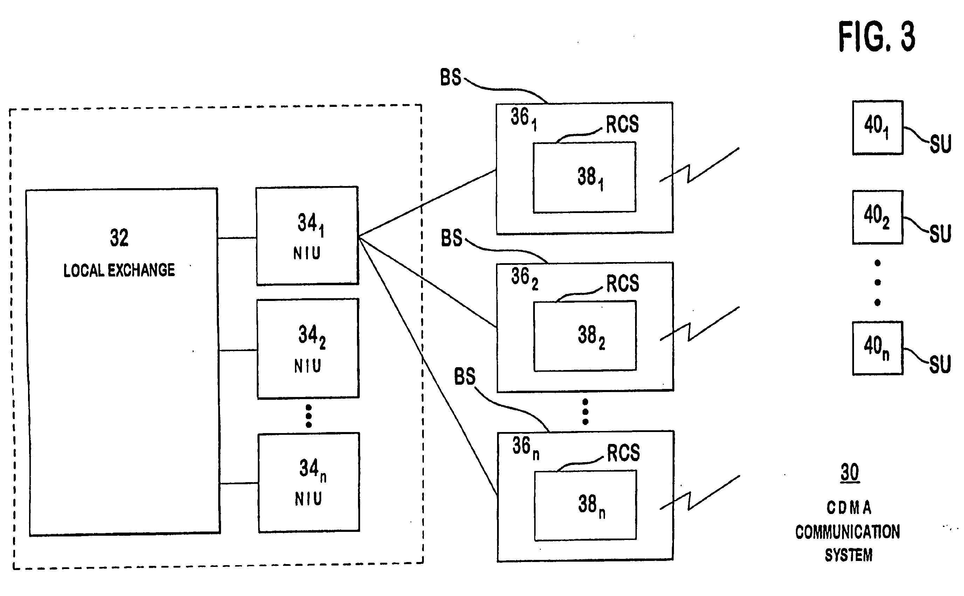

**Figure 2** illustrates a CDMA communication system 30. The communication system **30** comprises a plurality of base stations $36_1$, $36_2$ ... $36_n$. Each base station $36_1$, $36_2$ ... $36_n$ is in wireless communication with a plurality of subscriber units $40_1$, $40_2$ ... $40_n$, which may be fixed or mobile. Each subscriber unit $40_1$, $40_2$ ... $40_n$ communicates with either the closest base station $36_1$ or the base station $36_1$ which provides the strongest communication signal. Each base station $36_1$, $36_2$ ... $36_n$ is in communication with other components within the communication system **30** as shown in **Figure 3.**

A local exchange **32** is at the center of the communications system **30** and communicates with a plurality of network interface units (NIUs) $34_1$, $34_2$ ... $34_n$. Each NIU is in communication with a plurality of radio carrier stations (RCS) $38_1$, $38_2$ ... $38_n$ or base stations $36_1$, $36_2$ ... $36_n$. Each (RCS) $38_1$, $38_2$ ... $38_n$ or base station $36_1$, $36_2$ ... $36_n$ communicates with a plurality of subscriber units $40_1$, $40_2$ ... $40_n$ within its communicating range.

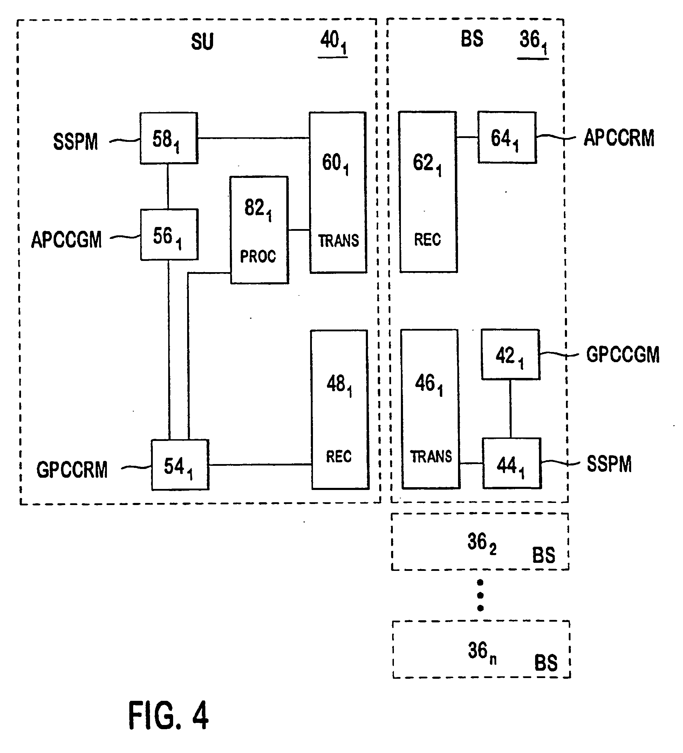

**Figure 4** depicts a block diagram of the pertinent parts of an existing spread spectrum CDMA communication system. Each independent base station $36_1$, $36_2$ ... $36_n$ generates a unique global pilot signal using a global pilot chip code generating means $42_1$ and spread spectrum processing means $44_1$. The global pilot chip code generating means $42_1$ generates a unique pseudo random chip code sequence. The unique pseudo random chip code sequence is used to spread the resultant signals bandwidth such as to 15 MHZ as used in the B-CDMA™ air interface. The spread spectrum processing means modulates the global pilot chip code sequence up to a desired center frequency. The global pilot signal is transmitted to all subscriber units $40_1$ by the base station's transmitter $46_1$.

A receiver $48_1$ at a subscriber unit $40_1$ receives available signals from a plurality of base stations $36_1$, $36_2$ ...

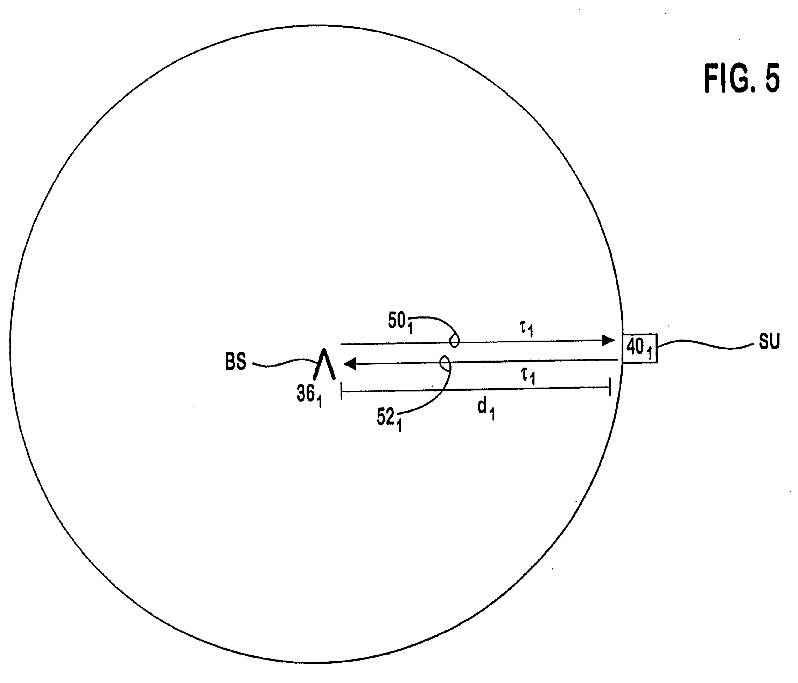

$36_n$. As shown in **Figure 5**, the global pilot $50_1$ travels from the base station $36_1$ to the subscriber unit $40_1$ and can be represented as:

$$\tau_1 = \frac{\underline{d}_1}{c} \qquad \textbf{Equation (1)}$$

The time the signal travels from the base station $36_1$ to the subscriber unit $40_1$, $\tau_1$, equals the distance between the base station $36_1$ and subscriber unit $40_1$, $d_1$, divided by the speed of light, **c**.

Referring back to **Figure 4**, a global pilot chip code recovery means $54_1$ within the subscriber unit $40_1$ can receive global pilot chip code sequences from a plurality of base stations $36_1$, $36_2$ ... $36_n$. The subscriber unit $40_1$ generates a replica of a global pilot chip code sequence and synchronizes the generated replica's timing with the received global pilot $50_1$. The subscriber unit $40_1$ also has a processor $82_1$ to perform the many analysis functions of the subscriber unit $40_1$.

The subscriber unit $40_1$ generates an assigned pilot signal $52_1$ using assigned pilot chip code generating means $56_1$ and spread spectrum processing means $58_1$. The assigned pilot chip code generating means $56_1$ generates a pseudo random chip code sequence with its timing synchronized with the recovered global pilot chip code sequence. As a result, the assigned pilot chip code sequence is delayed by $\tau_1$ with respect to the base station $36_1$, $36_2$ ... $36_n$. The spread spectrum processing means $58_1$ generates the assigned pilot signal $52_1$ by modulating the assigned pilot chip code sequence up to a desired center frequency. The assigned pilot signal $52_1$ is transmitted to all base stations $36_1$, $36_2$ ... $36_n$ within range to receive the assigned pilot signal $52_1$.

The base station $36_1$ receives the assigned pilot signal $52_1$ with the base station's receiver $62_1$. The received assigned pilot $52_1$ travels the same distance $d_1$ as the global pilot signal $50_1$ as shown in **Figure 5**. Accordingly, the received assigned pilot signal will be delayed by $\tau_1$ with respect to the mobile unit $40_1$ and by $2\tau_1$ with respect to the global pilot $50_1$ generated at the base station $36_1$.

Since the chip code sequence of the assigned pilot $52_1$ received at the base station $36_1$ will be delayed by $2\tau_1$ with respect to the chip code sequence of the global pilot signal $50_1$ generated at the base station $36_1$, the round trip propagation delay, $2\tau_1$, can be determined by comparing the timing of the two chip code sequences. Using the round trip propagation delay, $2\tau_1$, the distance $d_1$ between the base station $36_1$ and subscriber unit $40_1$ can be determined by:

$$d_1 = c \cdot \frac{2\tau_1}{2} \qquad \textbf{Equation (2)}$$

If a spreading sequence having a chipping rate of at least 80ns is used and the communication system has the ability to track $1/16^{th}$ of a chip, the distance $d_1$ can be measured to within 2 meters.

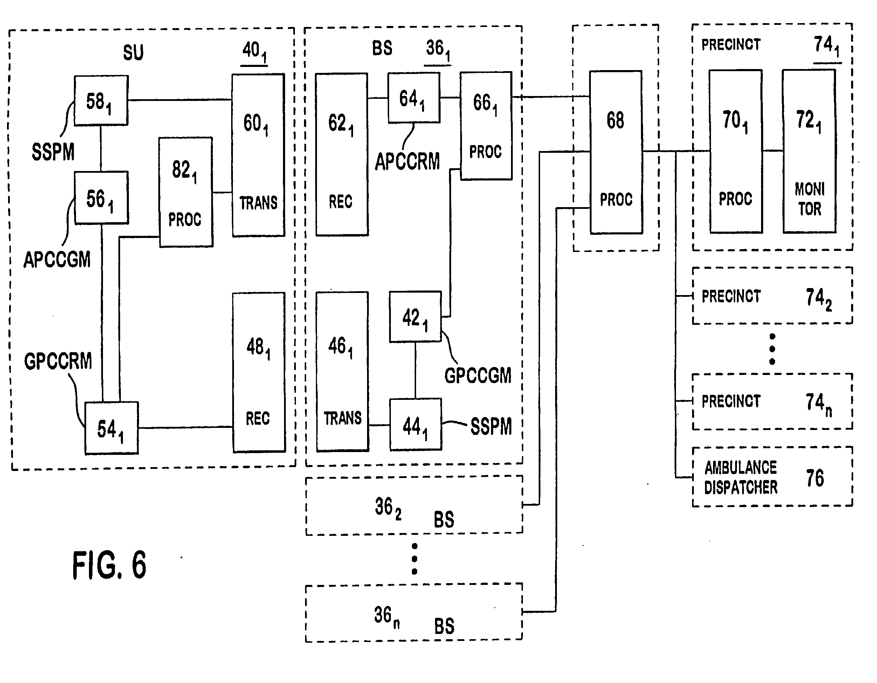

**Figure 6** is a block diagram of an arrangement for locating a subscriber unit. No additional hardware is required in the subscriber unit $40_1$. The only changes are implemented by software within the subscriber unit's processor $82_1$ and the processors $66_1$, $66_2$ ... $66_n$, 68, $70_1$, $70_2$ ... $70_n$ located within the base station $36_1$, NIU $34_1$ or Local Exchange $32_1$, Precincts $74_1$, $74_2$ ... $74_n$ and Ambulance Dispatcher **76**.

The subscriber unit $40_1$ is sent a signal by a base station $36_1$ indicating that an emergency call was initiated and to begin the subscriber location protocol. Upon receipt, the subscriber unit $40_1$ will sequentially synchronize its transmission chip code sequence to at least three base stations' chip code sequences. To allow reception by the base stations $36_2$, $36_3$ ... $36_n$ outside of the subscriber unit's normal communicating range, these transmissions will be sent at a higher than normal power level temporarily over-riding any adaptive power control algorithms.

A processor $66_1$ within each base station $36_1$, $36_2$ ... $36_n$ is coupled to the assigned pilot chip code recovery means $64_1$ and the global pilot chip code generator $42_1$. The processor $66_1$ compares the two chip code sequences to determine the round trip propagation delay $\tau_1$, $\tau_2$ ... $\tau_n$ and the respective distance $d_1$, $d_2$ ... $d_n$ between the subscriber unit $40_1$ and the respective base station $36_1$, $36_2$ ... $36_n$.

Within either a NIU **34**, or the local exchange **32**, a processor **68** receives the distances $d_1$, $d_2$ ... $d_n$ from the processors $66_1$, $66_2$ ... $66_n$ within all the base stations $36_1$, $36_2$ ... $36_n$. The processor **68** uses the distances $d_1$, $d_2$ ... $d_n$ to determine the location of the subscriber unit $40_1$ as follows.

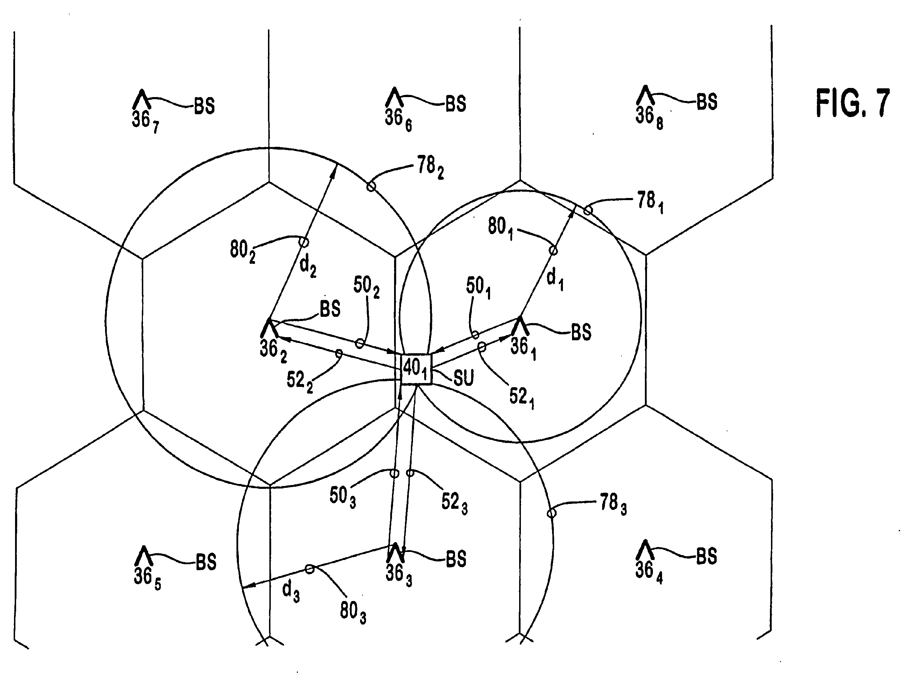

By using the known longitude and latitude from three base stations $36_1$, $36_2$, $36_3$ and distances $d_1$, $d_2$, $d_3$, the location of the subscriber unit $40_1$ is determined. As shown in **Figure 7** by using the three distances $d_1$, $d_2$, $d_3$, three circles $78_1$, $78_2$, $78_3$ with radiae $80_1$, $80_2$, $80_3$ are constructed. Each circle $78_1$, $78_2$, $78_3$ is centered around a respective base station $36_1$, $36_2$, $36_3$. The intersection of the three circles $78_1$, $78_2$, $78_3$ is at the location of the subscriber unit $40_1$.

Using the Cartesian coordinates, the longitude and latitude corresponding with each base station $36_1$, $36_2$ ... $36_n$ is represented as $X_n$, $Y_n$, where $X_n$ is the longitude and $Y_n$ is the latitude. If $X$, $Y$ represents the location of the subscriber unit $40_1$, using the distance formula the following equations result:

$$(X_1 \text{-} X)^2 + (Y_1 \text{-} Y)^2 = d_1^2 \qquad\qquad \textbf{Equation (3)}$$

$$(X_2 \text{-} X)^2 + (Y_2 \text{-} Y)^2 = d_2^2 \qquad\qquad \textbf{Equation (4)}$$

$$(X_3 \text{-} X)^2 + (Y_3 \text{-} Y)^2 = d_3^2 \qquad\qquad \textbf{Equation (5)}$$

In practice due to small errors in calculating the distances $d_1$, $d_2$, $d_3$, **Equations 3, 4** and **5** cannot be solved using conventional algebra. To compensate for the errors, a maximum likelihood estimation is used to determine the location and is well known to those skilled in the art. For increased accuracy, additional base stations $36_4$, $36_5$ ... $36_n$ can be used to calculate additional distances for inclusion in the estimation analysis.

The subscriber unit's location is sent through the communication system **30** to at least one precinct $74_1$, $74_2$ ... $74_n$ and an ambulance dispatcher **76**. A processor $70_1$ within each precinct $74_1$, $74_2$... $74_n$ and the ambulance dispatcher **76** receives the location of all emergency calls originating in the system and displays the location on a conventional computer monitor $72_1$. The display comprises a listing of all emergency calls and addresses on a geographic map.

An alternate approach reduces the number of processors by transmitting raw data through the communication system **30** and processing the raw data at a single site.

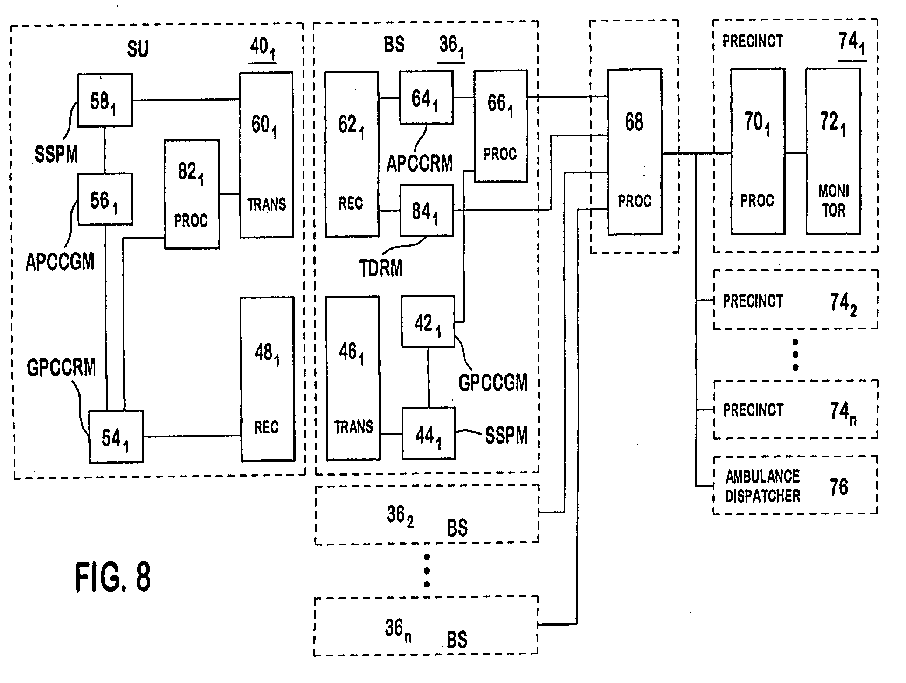

**Figure 8** is a further arrangement of a location system. At least two base stations $36_1$, $36_2$ ... $36_n$ have their internal timing synchronized with each other and transmit their respective global pilot signals $52_1$, $52_2$ ... $52_n$ with time synchronized chip code sequences. The subscriber unit $40_1$ receives the global pilots $52_1$, $52_2$ ... $52_n$. However, the received global pilots $52_1$, $52_2$ ... $52_n$ are not synchronized. The global pilot $52_1$ from a first base station $36_1$ will travel distance $d_1$ and is delayed by $\tau_1$. The global pilot $52_2$ from a second base station $36_2$ travels distance $d_2$ and is delayed by $\tau_2$. The subscriber unit $40_1$ recovers each base station's global pilot chip code sequence with its global pilot chip code recovery means $54_1$. A processor $82_1$ within the subscriber unit $40_1$ is coupled to each global pilot chip code recovery means $54_1$, $52_2$ ... $54_n$. The processor $82_1$ compares the chip code sequences of each pair of pilot chip code sequences and calculates the time differences $\Delta t_1$, $\Delta t_2$ ... $\Delta t_n$ between the sequences as follows.

Within the subscriber unit $40_1$, the chip code sequences used by each base station $36_1$, $36_2$ ... $36_n$ are stored. After synchronizing with the first base station's pilot $36_1$, the processor $82_1$ will store where within the sequence synchronization was obtained. This process is repeated for the other base stations $36_2$, $36_3$ ... $36_n$. The synchronization process can be done sequentially (synchronizing to the first base station's chip code sequence then the second, etc.) or in parallel (synchronizing to all base stations at the same time).

By using the relative time difference between $\tau_1$, $\tau_2$, ... $\tau_n$ each base station's chip code sequence and knowing that each base station's pilot was sent at the same time, with two base stations the time differences are calculated as follows:

$$\Delta t_1 = \tau_2 - \tau_1 \qquad\qquad \textbf{Equation (6)}$$

$$\Delta t_2 = \tau_3 - \tau_2 \qquad\qquad \textbf{Equation (7)}$$

The time differences $\Delta t_1$, $\Delta t_2$ ... $\Delta t_n$ are transmitted to at least one of the base stations $36_1$.

At least one base station $36_1$ recovers the time difference data from the received signals using time difference recovery means $84_1$. The time difference data is sent with the distance data $d_1$ through the communications system to a processor **68**. The processor 68 determines the location of the subscriber unit $40_1$ using the time difference data $\Delta t_1$, $\Delta t_2$ ... $\Delta t_n$ and the distance data $d_1$, $d_2$ ... $d_n$ as follows.

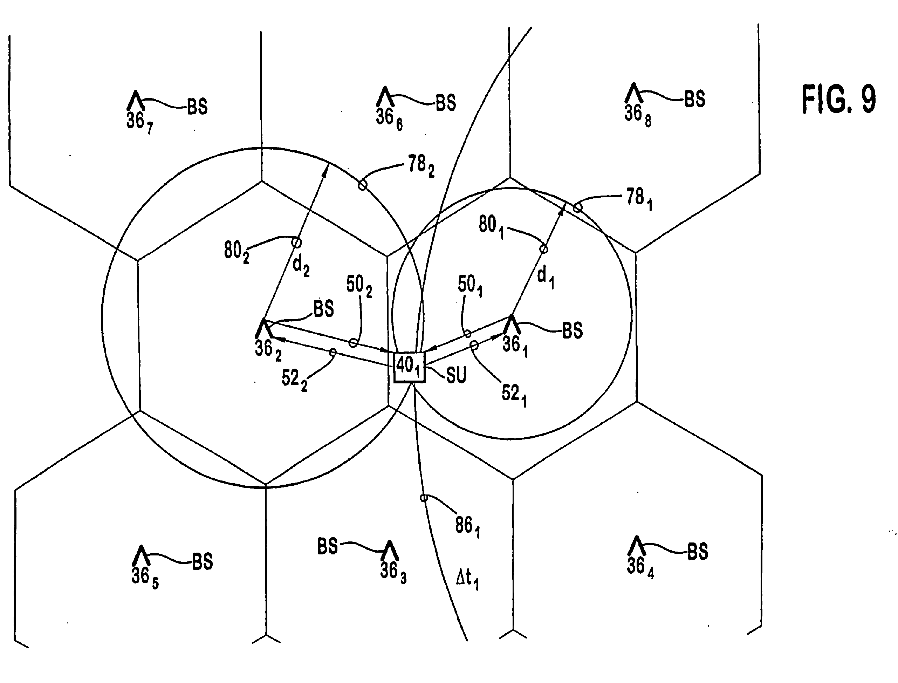

Using information from only two base stations $36_1$, $36_2$ as shown in **Figure 9,** the processor uses distances

$d_1$, $d_2$ to create two circles $78_1$, $78_2$. Using the time difference, $\Delta t_1$, a hyperbola $86_1$ can be constructed as follows.

All the points along the hyperbola $86_1$ receive the global pilot signals $52_1$, $52_2$ from the synchronized base stations $36_1$, $36_2$ with the same time difference, $\Delta t_1$. The time difference $\Delta t_1$ can be converted to a distance difference $\Delta d_1$ by substituting $\Delta t_1$ for $t_1$ and $\Delta d_1$ for $d_1$ in **Equation 1**. Using the distance formula and **X, Y** as the location of the subscriber unit $40_1$, the following equation results:

$$\Delta d_1 = \sqrt{(X_1-X)^2+(Y_1-Y)^2} - \sqrt{(X_2-X)^2+(Y_2-Y)^2} \qquad \textbf{Equation (8)}$$

By using **Equation 8** with **Equations 3** and **4** in a maximum likelihood estimation, the location of the subscriber unit $40_1$ can be determined. The subscriber unit's location is subsequently sent to the nearest police precinct $74_1$, $74_2$ ... $74_n$ and ambulance dispatcher **76** in the cellular area.

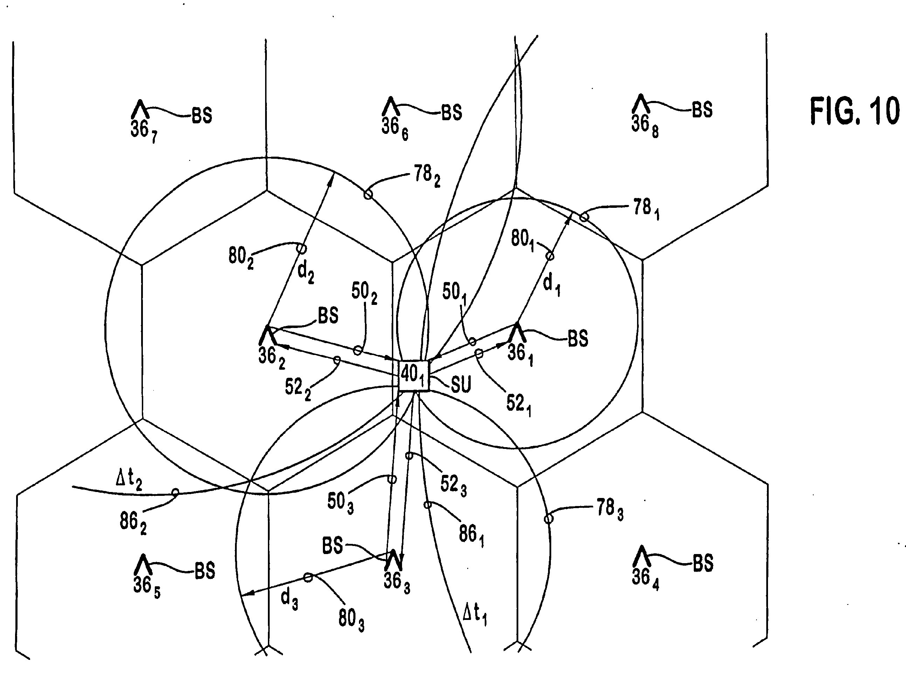

For improved accuracy, additional base stations $36_1$, $36_2$ ... $36_n$ are used. **Figure 10** shows an arrangement with three base stations $36_1$, $36_2$, $36_3$. The distances $d_1$, $d_2$, $d_3$ are used to create three circles $78_1$, $78_2$, $78_3$. Using time differences $\Delta t_1$, $\Delta t_2$, two intersecting hyperbolas $86_1$, $86_2$ are constructed. With maximum likelihood estimation, the subscriber units' location calculated with two hyperbolas $86_1$, $86_2$, and three circles $78_1$, $78_2$, $78_3$ yields greater accuracy.

As shown in **Figure 8**, the subscriber unit $40_1$ is required to process each global pilot chip code sequence to determine the time differences $\Delta t_1$, $\Delta t_2$ ... $\Delta t_n$. An alternate approach removes the processing from the subscriber unit $40_1$.

With reference to **Figure 6**, the mobile unit $40_1$ will synchronize the assigned pilot to one of the base station's global pilot chip code sequences, such as the nearest base station $36_1$ with a delay of $\tau_1$. The assigned pilot $50_1$ is transmitted to all base stations $36_1$, $36_2$ ... $36_n$. The assigned pilot $50_1$ will be received at each base station with a respective delay, $\tau_1 + \tau_1$, $\tau_1 + \tau_2$, $\tau_1 + \tau_3$. Each base station $36_1$, $36_2$ ... $36_n$ will send the delayed chip code sequence along with the calculated distance to a processor **68** located in a NIU $34_1$ or local exchange **32**. The processor **68** will calculate the time differences $\Delta t_1$, $\Delta t_2$ ... $\Delta t_n$ by comparing the received assigned pilot chip code sequences. Since all received assigned pilot chip code sequences are delayed by $\tau_1$, the $\tau_1$ delay will cancel out of the resultant time differences $\Delta t_1$, $\Delta t_2$ ... $\Delta t_n$. Accordingly, the subscriber unit $40_1$ can be located using hyperbolas $86_1$, $86_2$ as previously described.

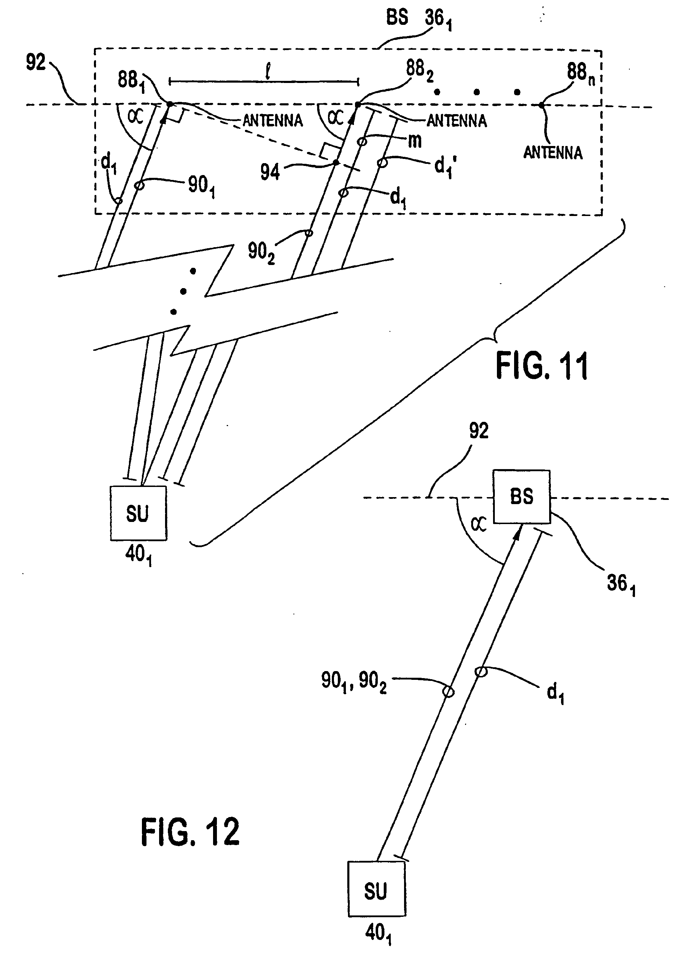

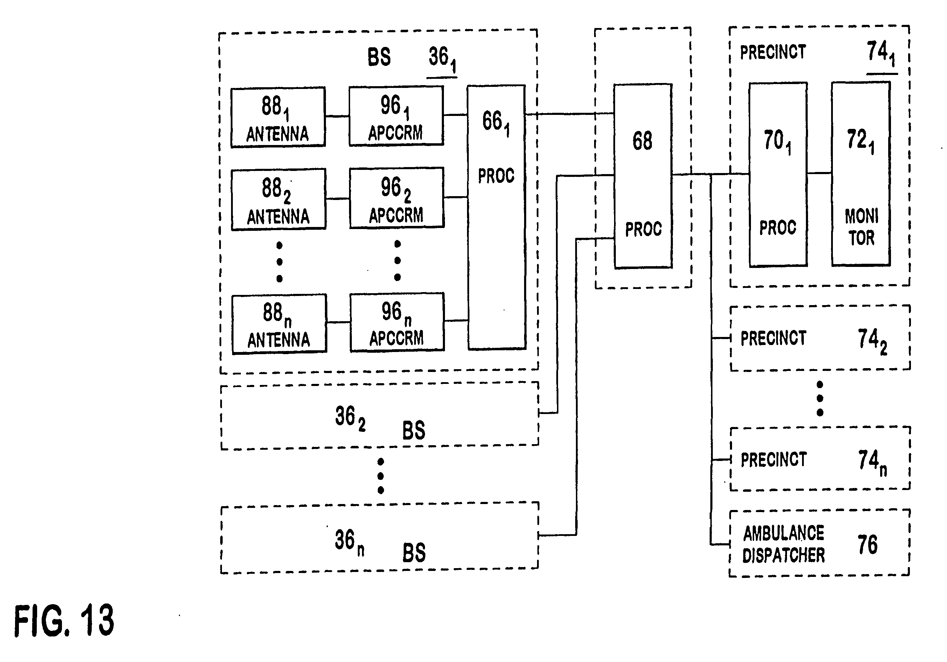

An arrangement shown in **Figures 11, 12** and **13** uses a base station $36_1$ with multiple antennas $88_1$, $88_2$ ... $88_n$ according to the present invention. Two of the antennas $88_1$, $88_2$ lie along a centerline **92** at a known distance, *l*, apart as shown in **Figure 11**. Both antennas $88_1$, $88_2$ receive the assigned pilot signal $90_1$, $90_2$ from the subscriber unit $40_1$. However, the antenna $88_2$ further away from the subscriber unit $40_1$ receives the signal over a slightly longer distance $d_1'$ and with a slight delay with respect to the nearer antenna $88_1$. This delay results in a carrier phase difference, $\phi$, between the signals received at each antenna as shown on **Figure 13**. A processor **66** using the received carrier phase difference and the chip code sequence recovered by each assigned pilot chip code recovery means $96_1$, $96_2$ ... $96_n$ can determine the location of the subscriber unit $40_1$ as follows.

As shown in **Figure 12**, the subscriber unit $40_1$ is located at distance $d_1$ at angle $\alpha$ from the centerline **92** of the antennas $88_1$, $88_2$. As seen at the scale of **Figure 12** both received assigned pilot signals $90_1$, $90_2$ appear to be coincident. However, as shown in **Figure 11**, the received assigned pilot signals $90_1$, $90_2$ are slightly separated. The received assigned pilot signal $90_1$ returning to the first antenna $88_1$ travels a distance $d_1$. The received assigned pilot signal $90_2$ returning to the second antenna $88_2$ travels a slightly longer distance $d_1'$. As shown in **Figure 11**, the difference between the two distances $d_1$, $d_1'$ is a distance $m$.

Since the distances $d_1$, $d_1'$ between the antennas $88_1$, $88_2$ and the subscriber unit $40_1$ are much larger than the distance *l* between the antennae $88_1$, $88_2$ both received assigned pilot signals $90_1$, $90_2$ follow approximately parallel paths. By constructing a right triangle using a point **94** which is distance $d_1$ from the subscriber unit $40_1$ as shown in **Figure 11**, the angle $\alpha$ can be determined by the following geometric relationship:

$$\alpha = \cos^{-1}(m/l). \qquad \textbf{Equation (9)}$$

The distance $m$ can be determined by using the carrier phase difference, $\phi$, between the two received signals $90_1$, $90_2$ as follows:

$$m = \frac{\phi \cdot \lambda}{2\pi} \qquad \textbf{Equation (10)}$$

The distance *m* equals the phase difference between the two signals, $\phi$, in radians multiplied by the wavelength of the signal, $\lambda$, divided by $2\pi$. The wavelength, $\lambda$, can be derived from the known frequency f of the assigned pilot signal as follows:

$$\lambda = c/f.$$

<div align="right">

**Equation (11)**

</div>

The processor 68 also compares the chip code sequences of the global pilot generating means $42_1$ with the recovered assigned pilot chip code sequence to determine the distance $d_1$ as shown in **Figure 6**. Using both the angle $\propto$ and distance $d_1$, the processor $66_1$ locates the subscriber unit $40_1$ using simple geometry. There are many techniques well known to those skilled in the art to eliminate the ambiguity between locations above and below the antennas $88_1$, $88_2$. One such technique is using antennas employing sectorization. Subsequently, the subscriber unit's location is sent to the precincts $74_1$, $74_2$ ... $74_n$ and ambulance dispatcher **76.** Additional antennas may be used to improve on the accuracy of the system.

An alternate arrangement uses more than one base station $36_1$, $36_2$... $36_n$. A processor **68** located within either a NIU $34_1$ or the local exchange **32** collects distance and angle information from more than one base station $36_1$, $36_2$ ... $36_n$ as well as the time differences $\Delta t_1$, $\Delta t_2$ ... $\Delta t_n$, between the base stations $36_1$, $36_2$... $36_n$. Using the maximum likelihood estimation technique, the processor **68** determines a more accurate location of the subscriber unit $40_1$.

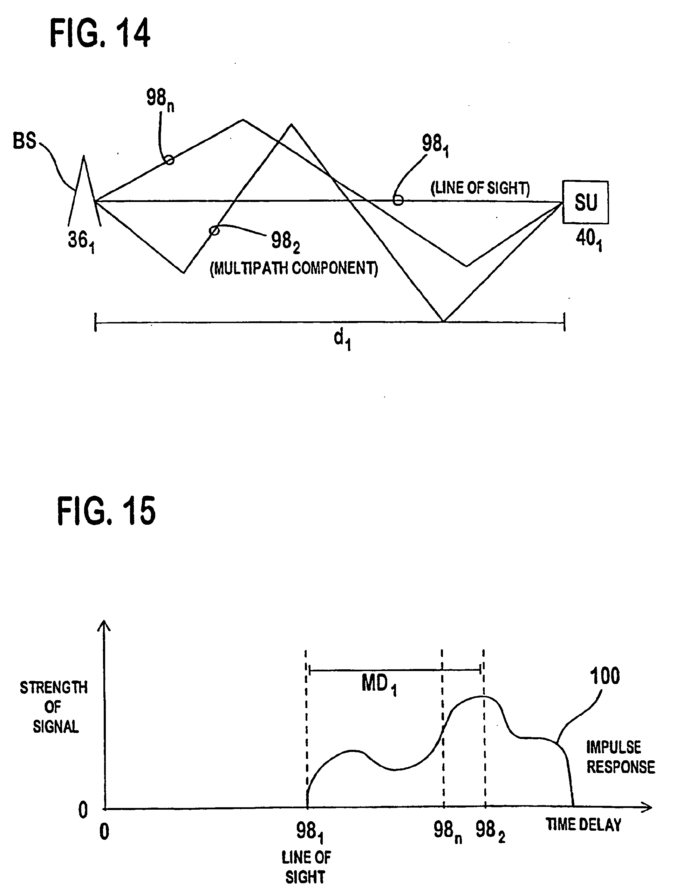

A further arrangement corrects for multipath. **Figure 14** illustrates multipath. A signal such as a global pilot signal is transmitted from a base station $36_1$. The signal follows a multitude of paths $98_1$, $98_2$ ... $98_n$ between the base station $36_1$ and subscriber unit $40_1$.

Figure 13 is a graph showing the impulse response 136 of the received multipath components. Since each received multipath component travels a unique path, it arrives at a receiver with a propagation delay determined by the length of the path $98_1$, $98_2$ ... $98_n$. The impulse response **106** shows the collective signal magnitude of all the multipath components received at each propagation delay.

The previously described subscriber unit location techniques assumed the subscriber unit $40_1$ synchronizes with the line of sight multipath component $98_1$ traveling distance $d_1$. However, if the subscriber unit synchronizes with a non-line of sight multipath component $98_1$, $98_2$ ... $98_n$, the distance calculation will be in error due to the delay $MD_1$ as shown in **Figure 15.**

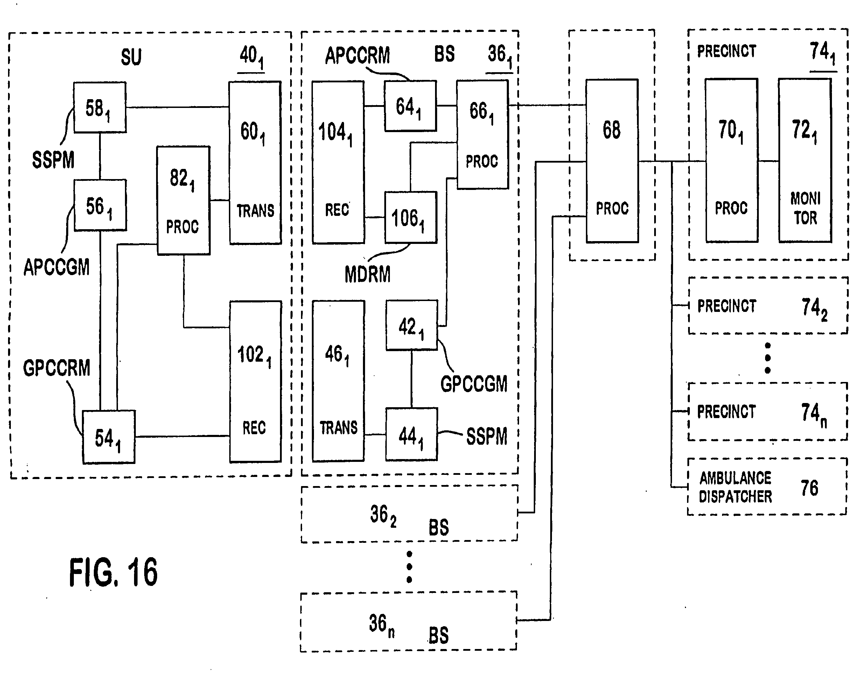

**Figure 16** is a system correcting for errors resulting from multipath. The global pilot $50_1$ is sent from the base station $36_1$ to subscriber unit $40_1$. The subscriber unit $40_1$ collects all of the multipath components using a multipath receiver $102_1$ such as disclosed in U.S. Patent Application No. 08/669,769, Lomp et al., incorporated here by reference. A processor $82_1$ within the subscriber unit $40_1$ analyzes the impulse response **100** of the received global pilot signal $50_1$.

Since the line of sight multipath component $98_1$ travels the shortest distance $d_1$, the first received component $98_1$ is the line of sight component. If the line of sight component is not received, the first received component $98_1$ will be the closest and, accordingly, the best available estimate for the line of sight component. The processor $82_1$ compares the chip code sequence of the first received component $98_1$ with the chip code sequence used to synchronize the assigned pilot chip code sequence. This comparison determines the delay due to multipath, $MD_1$. The multipath delay, $MD_1$, is transmitted to the base station $36_1$.

A processor $66_1$ and multipath receiver $104_1$ within the base station $36_1$ perform the same analysis on the received assigned pilot signal. As a result, the multipath delay, $MD_2$, of the assigned pilot signal is determined. Additionally, multipath delay recovery means $106_1$ recovers the transmitted global pilot signal's multipath delay $MD_1$ for use by the processor $66_1$. The processor $66_1$ compares the generated global pilot chip code sequence to the recovered assigned pilot chip code sequence to determine the round trip propagation delay $2\tau_1$. To correct for multipath, the processor $66_1$ subtracts both the global pilot signal's multipath delay $MD_1$ and the assigned pilot signals multipath delay $MD_2$ from the calculated round trip propagation delay, $2\tau_1$. The corrected round trip propagation delay is used to determine the subscriber unit's location in one of the techniques as previously described.

Although the invention has been described in part by making detailed reference to certain specific embodiments, such detail is intended to be instructive rather than restrictive. It will be appreciated by those skilled in the art that many variations may be made in the structure and mode of operation without departing from the invention as disclosed in the teachings herein.

**EP 1 513 366 B1**

**Claims**

1. A base station comprising: a plurality of antennas ($88_1$-$88_n$), each of the antennas ($88_1$-$88_n$) separated by a known distance; means for transmitting a first spread spectrum signal having a first code; means ($66_1$) for comparing a phase difference of a carrier signal of a second spread spectrum signal as received by each of the plurality of antennas; means ($66_1$) for determining an angle of the received second spread spectrum signal using the known distance between the antennas and the phase difference; the base station **characterized in that** it comprises:

   means for receiving (1041), using the plurality of antennas($88_1$-$88_n$), the second spread spectrum signal having a second code, the second spread spectrum signal time synchronized with the first spread spectrum signal;
   means ($66_1$) for making a distance determination based on in part a timing difference between the second code of the received second spread spectrum signal and the first code of the base station's transmitted first spread spectrum signal;
   means ($66_1$) for determining a location of a source of the second spread spectrum signal using the determined angle and the distance determination; and
   means ($66_1$ for analyzing an impulse response of multipath components of the second spread spectrum signal to determine a first received component of the second spread spectrum signal and the determined first received component is used to make the distance determination.

2. The base station of claim 1 further **characterized in that** the first spread spectrum signal is a pilot signal.


**Patentansprüche**

1. Teilnehmereinheit, die Folgendes aufweist:

   eine Einrichtung zum Empfangen mehrerer erster Spreizspektrumsignale, wobei jedes erste Spreizspektrumsignal einen ersten Code hat;
   eine Einrichtung zum Analysieren einer Impulsantwort von Mehrwegekomponenten jedes empfangenen ersten Spreizspektrumsignals, um eine erste empfangene Komponente dieses empfangenen ersten Spreizspektrumsignals zu bestimmen;
   eine Einrichtung für jedes empfangene erste Spreizspektrumsignal zum Senden eines zweiten Spreizspektrumsignals mit einer zweiten Chip-Codezeit, die mit der ersten empfangenen Komponente dieses empfangenen ersten Spreizspektrumsignal synchronisiert ist;
   eine Einrichtung zum Bestimmen einer Codezeitvorgabedifferenz zwischen den ersten empfangenen Komponenten der empfangenen ersten Spreizspektrumsignale; und
   eine Einrichtung zum Senden der Codezeitvorgabedifferenz.

2. Teilnehmereinheit nach Anspruch 1, wobei das erste Spreizspektrumsignal ein Pilotsignal ist.

3. Basisstation, die Folgendes aufweist:

   mehrere Antennen, wobei die Antennen jeweils um eine bekannte Distanz getrennt sind;
   eine Einrichtung zum Senden eines ersten Spreizspektrumsignals mit einem ersten Code;
   eine Einrichtung zum Empfangen unter Verwendung der mehreren Antennen eines zweiten Spreizspektrumsignals mit einem zweiten Code, wobei das zweite Spreizspektrumsignal mit dem ersten Spreizspektrumsignal zeitsynchronisiert ist;
   eine Einrichtung zum Durchführen einer Distanzbestimmung auf Grundlage zum Teil einer Zeitvorgabedifferenz zwischen dem zweiten Code des empfangenen zweiten Spreizspektrumsignals und dem ersten Code des von der Basisstation gesendeten ersten Spreizspektrumsignals;
   eine Einrichtung zum Vergleichen einer Phasendifferenz eines Trägersignals des zweiten Spreizspektrumsignals, wie es von jeder der mehreren Antennen empfangen wird;
   eine Einrichtung zum Bestimmen eines Winkels des empfangenen zweiten Spreizspektrumsignals unter Verwendung der bekannten Distanz zwischen den Antennen, und der Phasendifferenz; und
   eine Einrichtung zum Bestimmen der örtlichen Lage eines Herkunftsorts des zweiten Spreizspektrumsignals unter Verwendung des bestimmten Winkels und der Distanzbestimmung.

4. Basisstation nach Anspruch 3, die eine Einrichtung zum Analysieren einer Impulsantwort von Mehrwegekomponenten des zweiten Spreizspektrumsignals aufweist, um eine erste empfangene Komponente des zweiten Spreizspektrumsignals zu bestimmen, und wobei die bestimmte erste empfangenen Komponente verwendet wird, um die Distanzbestimmung durchzuführen.

**5.** Basisstation nach Anspruch 3, wobei das erste Spreizspektrumsignal ein Pilotsignal ist.


**Revendications**

**1.** Un poste d'abonné comprenant :

un moyen de recevoir une pluralité de premiers signaux à spectre étalé, chaque premier signal à spectre étalé ayant un premier code ;
un moyen d'analyser une réponse impulsionnelle de composantes à trajets multiples de chaque premier signal à spectre étalé reçu pour déterminer une première composante reçue de ce premier signal à spectre étalé reçu ;
un moyen pour chaque premier signal à spectre étalé reçu de transmettre un deuxième signal à spectre étalé ayant un deuxième temps de code de puce synchronisé avec la première composante reçue de ce premier signal à spectre étalé reçu ;
un moyen de déterminer une différence temporelle de code entre les premières composantes reçues des premiers signaux à spectre étalé reçus et
un moyen de transmettre la différence temporelle de code.

**2.** Le poste d'abonné de la revendication 1, où le premier signal à spectre étalé est un signal pilote.

**3.** Une station de base comprenant :

une pluralité d'antennes, chacune des antennes étant séparée par une distance connue ;
un moyen de transmettre un premier signal à spectre étalé ayant un premier code ;
un moyen de recevoir, moyennant la pluralité d'antennes, un deuxième signal à spectre étalé ayant un deuxième code, le temps du deuxième signal à spectre étalé étant synchronisé avec le premier signal à spectre étalé ;
un moyen d'effectuer une détermination de distance basée en partie sur une différence temporelle entre le deuxième code du deuxième signal à spectre étalé reçu et le premier code du premier signal à spectre étalé transmis par la station de base ;
un moyen de comparer une différence de phase d'un signal porteur du deuxième signal à spectre étalé tel que reçu par chacune d'une pluralité d'antennes ;
un moyen de déterminer un angle du deuxième signal à spectre étalé reçu moyennant la distance connue entre les antennes et la différence de phase ; et
un moyen de localiser une source du deuxième signal à spectre étalé moyennant l'angle déterminé et la détermination de distance.

**4.** La station de base de la revendication 3, comprenant un moyen d'analyser une réponse impulsionnelle de composantes à trajets multiples du deuxième signal à spectre étalé pour déterminer une première composante reçue du deuxième signal à spectre étalé, la première composante reçue déterminée étant utilisée pour effectuer la détermination de distance.

**5.** La station de base de la revendication 3, où le premier signal à spectre étalé est un signal pilote.

TRANSMITTED SPECTRUM

INFORMATION

INFORMATION

SPREADING
CODE SEQUENCE

DESPREADING
CODE SEQUENCE

PRIOR ART

FIG. 1

EP 1 513 366 B1

FIG. 2

$36_8$ BS

$36_6$ BS

$36_7$ BS

$40_n$ SU

$36_1$ BS

$40_2$ SU

$40_1$ SU

$36_2$ BS

$36_4$ BS

$36_3$ BS

$36_5$ BS

FIG. 3

BS

$36_1$ — RCS

$38_1$

BS

$36_2$ — RCS

$38_2$

BS

$36_n$ — RCS

$38_n$

32
LOCAL EXCHANGE

$34_1$
NIU

$34_2$
NIU

$34_n$
NIU

$40_1$ — SU

$40_2$ — SU

$40_n$ — SU

30
CDMA
COMMUNICATION
SYSTEM

EP 1 513 366 B1

FIG. 4

EP 1 513 366 B1

**FIG. 5**

FIG. 6

FIG. 7

FIG. 8

# FIG. 9

FIG. 10

EP 1 513 366 B1

FIG. 11

FIG. 12

FIG. 13

EP 1 513 366 B1

# FIG. 14

BS

$98_n$

$98_1$

(LINE OF SIGHT)

SU

$36_1$

$98_2$
(MULTIPATH COMPONENT)

$40_1$

$d_1$

# FIG. 15

STRENGTH
OF
SIGNAL

$MD_1$

100

IMPULSE
RESPONSE

0

0

$98_1$
LINE OF
SIGHT

$98_n$ $98_2$

TIME DELAY

FIG. 16

EP 1 513 366 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5732354 A
- WO 9818018 A
- EP 0865223 A2
- US 669769 A